(19) Europäisches Patentamt

European Patent Office

Office européen des brevets

(11) **EP 1 201 504 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(51) Int Cl.:
*B60R 16/02* (2006.01)   *H02J 1/00* (2006.01)
*G01R 31/36* (2006.01)

(21) Anmeldenummer: **01124839.0**

(22) Anmeldetag: **18.10.2001**

(54) **Verfahren zur Regelung der Leistungsversorgung steuerbarer Verbraucher in einem Kraftfahrzeug**

Method for controlling power-supply of controllable loads in a vehicle

Méthode pour la régulation de la distribution d'énergie pour des équipements électriques dans un véhicule automobile

(84) Benannte Vertragsstaaten:
**DE ES FR GB IT SE**

(30) Priorität: **21.10.2000 DE 10052315**

(43) Veröffentlichungstag der Anmeldung:
**02.05.2002 Patentblatt 2002/18**

(73) Patentinhaber: **ROBERT BOSCH GMBH**
**70442 Stuttgart (DE)**

(72) Erfinder:
• **Reutlinger, Kurt**
**70174 Stuttgart (DE)**

• **Schmucker, Clemens**
**71732 Tamm (DE)**
• **Meyer, Helmut**
**71254 Ditzingen (DE)**
• **Baumann, Torsten**
**75031 Eppingen-Adelshofen (DE)**

(56) Entgegenhaltungen:
**EP-A- 0 560 468        EP-A- 0 800 955**
**DE-A- 4 325 505        US-A- 5 193 067**
**US-A- 5 412 323        US-A- 5 710 465**
**US-A- 5 856 711**

EP 1 201 504 B1

**Beschreibung**

Die Erfindung betrifft ein Verfahren zur Regelung der Leistungsversorgung steuerbarer Verbraucher in einem Kraftfahrzeug.

Stand der Technik

Aus der DE 39 36 638 C1 ist bereits ein Verfahren zur Sicherung der elektrischen Energieversorgung in einem Kraftfahrzeug bekannt. Dabei werden die elektrischen Verbraucher, die für den sicheren Betrieb des Kraftfahrzeugs nicht zwingend notwendig sind, in Gruppen unterteilt. Der Verbraucher dieser einzelnen Gruppen werden in Abhängigkeit vom Ladezustand der Batterie abgeschaltet bzw. durch eine getaktete Bestromung nur mit einer reduzierten Leistung versorgt. Als weiteres Kriterium für den getakteten Betrieb der elektrischen Verbraucher kann die Bordnetzspannung berücksichtigt werden.

Aus der EP 0 601 300 B1 ist ein fahrzustandsabhängiges Schalten zwischen Verbrauchern in einem Kraftfahrzeug bekannt. Dabei werden zur Entlastung des elektrischen Bordnetzes sowohl bei unterschiedlichen Belastungszuständen der Brennkraftmaschine als auch bei deren An- oder Abschaltung für die elektrischen Verbraucher eine Ab- oder Rückschalthierarchie festgelegt, die einerseits ein Optimum an Energieeinsparung und andererseits eine vollständige Aufrechterhaltung der Betriebs- und Fahrsicherheit des Fahrzeugs ermöglicht. Zu diesem Zweck ist eine Steuervorrichtung vorgesehen, durch welche mehreren verschiedenen Fahrzuständen, die die Fahrgeschwindigkeit und den Stillstand des Fahrzeugs einerseits und für diese Zustände den jeweiligen Zustand der Brennkraftmaschine andererseits betreffen, jeweils vorgegebene Typen von Verbrauchern zugeordnet sind. Diese werden auf der Basis der von Sensoren gelieferten Signale dem jeweils vorliegenden Fahrzustand entsprechend einzeln oder Gruppenweise und gleichzeitig oder nacheinander entsprechend einer in der Steuereinrichtung abgelegten Rangfolge ab- oder rückgeschaltet. Dadurch wird für ein großes Spektrum von Fahrzuständen situationsgerecht ein geringer Energieverbrauch möglich.

Aus der DE 197 45 849 A1 ist bereits eine Einrichtung zur Energieverteilung in einem Kraftfahrzeug bekannt. Diese Einrichtung weist einen von einer Brennkraftmaschine angetriebenen Generator auf, der ein Bordnetz mit elektrischer Leistung versorgt. Dabei wird die Energieverteilung mittels einer Steuereinrichtung realisiert, die als Bordnetzmanager arbeitet. Die Steuereinheit ermittelt aus ihr zugeführten Informationen eine Regelstrategie für die Regelung der Komponenten des Bordnetzes und der Brennkraftmaschine. Die Energieverteilung zwischen dem Bordnetz und der Brennkraftmaschine erfolgt dabei unter Berücksichtigung der Bedingung, daß die Bordnetzsollspannung innerhalb vorgebbarer Grenzen liegt.

Aus der DE 199 60 079 A1 ist ein Verfahren zur Ein- bzw. Abschaltung von Verbrauchern mittels Schaltelementen bekannt, wobei die Verbraucher in verschiedene Klassen eingeteilt sind. Dabei erfolgt im Rahmen eines von einem Steuergerät durchgeführten Energiemanagements die Ansteuerung der Schaltelemente derart, daß die gewählten Prioritäten für die Ansteuerung der Schaltelemente während des Betriebes dynamisch verändert werden können. Dadurch ist eine betriebszustandsabhängige Anpassung der Schaltprioritäten während des laufenden Betriebes möglich. Eine Abschaltung von Verbrauchern erfolgt durch die Veränderung der Schaltpriorität so, daß die Wahrnehmbarkeit der Betriebszustände möglichst unterdrückt wird.

Vorteile der Erfindung

Das erfindungsgemäße Verfahren, gemäß Anspruch 1, zur Regelung der Leistungsversorgung steuerbarer Verbraucher in einem Kraftfahrzeug hat demgegenüber den Vorteil, daß mit Hilfe einer Batteriestromregelung die Leistungserzeugung bzw. der Leistungsverbrauch im Bordnetz so eingestellt wird, daß sich ein gewünschter Batteriestrom einstellt. Die beanspruchte Regelung des Batteriestroms, die entsprechend vorgegebener Kriterien vorgenommen wird, sichert die Funktion der Batterie als wichtige sicherheitsrelevante Komponente im elektrischen Bordnetz eines Kraftfahrzeugs. Über die im Rahmen des elektrischen Energiemanagements verfügbaren Größen im Netz wird ein Rückschluß auf den Leistungsbedarf und die erzielbare Generatorleistung möglich. Dieses Wissen wird zur Regelung der Leistungsversorgung der steuerbaren Verbraucher benutzt. Beispiele für derartige steuerbare Verbraucher, deren Ab- oder Zuschaltung vom Fahrer des Kraftfahrzeugs nicht sofort bemerkt wird, sondern erst nach Ablauf eines bestimmten Zeitintervalls, sind beispielsweise die Sitzheizung und andere elektrische Zuheizer, die auf Grund ihres Speicherverhaltens für eine bestimmte Zeit in ihrer Leistung reduziert werden können.

Gemäß einer ersten Ausführungsform der Erfindung, bei welcher keine Abschätzung der für die steuerbaren Verbraucher verfügbaren Leistung vorgesehen ist, wird die mittels des Reglers ermittelte Korrekturleistung von einem Leistungswert subtrahiert, der entweder gleich der Solleistung der steuerbaren Verbraucher oder zu Null gesetzt wird. Im ersten Fall ist die Funktionalität der Verbraucher im ersten Moment gesichert mit dem Nachteil einer eventuellen Entladung der Batterie bzw. einem Spannungseinbruch. Im zweiten Fall werden die steuerbaren Verbraucher langsam eingeschaltet und erreichen ihre volle Funktionalität erst nach einiger Zeit. Dabei entfällt eine Belastung der Batterie.

Gemäß einer zweiten Ausführungsform der Erfindung erfolgt eine Vorsteuerung, in deren Rahmen eine Abschätzung der für die steuerbaren Verbraucher verfügbaren Leistung vorgenommen wird. Diese Vorsteuerung hat den Vorteil, daß die Auswirkungen einer Entladung der Batterie und eines verzögerten Einschaltens der steuerbaren Verbraucher, wie sie bei der ersten Ausführungsform auftreten, abgeschwächt werden.

Zeichnung

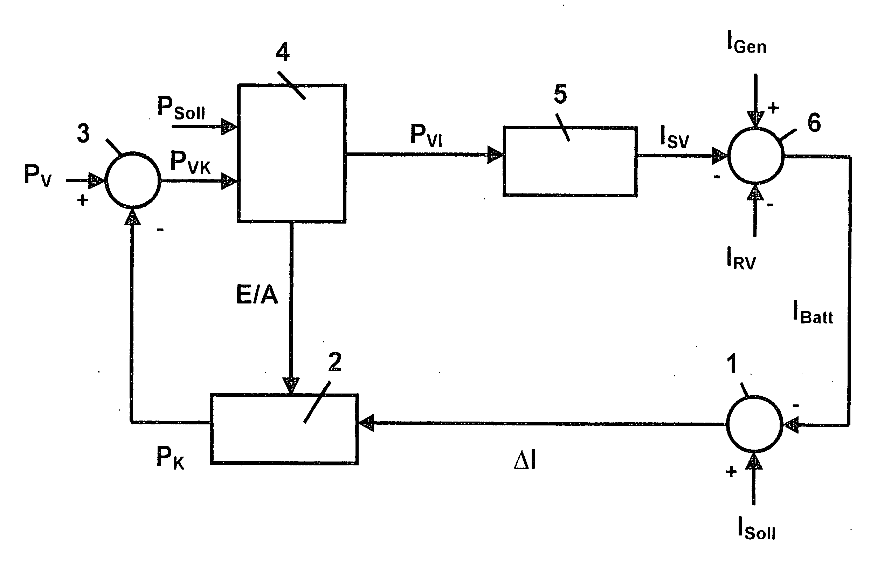

Die Erfindung wird mit Hilfe der Figur beispielhaft erläutert und in der nachfolgenden Beschreibung näher beschrieben. In der Figur sind die zum Verständnis der Erfindung wesentlichen Bestandteile eines Systems zur Regelung der Leistungsversorgung steuerbarer Verbraucher in einem Kraftfahrzeug dargestellt.

Beschreibung

Bei dem in der Figur dargestellten System erfolgt eine Regelung des Batteriestromes $I_{Batt}$ auf einen vorgegebenen Batteriestromwert $I_{Soll}$.

Zu diesem Zweck wird der gemessene Batteriestrom $I_{Batt}$ des Fahrzeugs in einem Subtrahierer 1 vom vorgegebenen Batteriestromsollwert Sol, subtrahiert. Das ermittelte Stromdifferenzsignal $\Delta I$ dient zur Ansteuerung eines Reglers 2, welcher ausgangsseitig eine Korrekturleistung $P_K$ zur Verfügung stellt. Diese wird in einem weiteren Subtrahierer 3 von der verfügbaren Leistung $P_V$ für die steuerbaren Verbraucher subtrahiert. Am Ausgang des Subtrahierers 3 steht die korrigierte verfügbare Leistung $P_{VK}$ für die steuerbaren Verbraucher zur Verfügung.

Diese wird ebenso wie die Solleistung $P_{Soll}$ für die steuerbaren Verbraucher einem Vergleichs- und Steuerglied 4 zugeführt. In diesem wird durch einen Vergleich der beiden genannten Eingangssignale überprüft, welches dieser beiden Eingangssignale kleiner ist. Das kleinere der beiden Eingangssignale wird den steuerbaren Verbrauchern 5 als Istleistung $P_{VI}$ zur Verfügung gestellt. Weiterhin erzeugt das Vergleichs- und Steuerglied 4 ein Ein-/Ausschaltsignal E/A für den Regler 2. Das Einschaltsignal E wird dann generiert, wenn die Solleistung $P_{Soll}$ für die steuerbaren Verbraucher größer ist als die korrigierte verfügbare Leistung $P_{VK}$ für die steuerbaren Verbraucher. Ist die korrigierte verfügbare Leistung $P_{VK}$ hingegen größer als die Solleistung $P_{Soll}$ für die steuerbaren Verbraucher, dann wird das Ausschaltsignal A erzeugt, um den Regler 2 auszuschalten.

Der durch die steuerbaren Verbraucher fließende Strom $I_{SV}$ wird gemessen und einer Subtahierstufe 6 zugeführt. In dieser wird vom Generatorstrom $I_{Gen}$ die Summe aus dem durch die steuerbaren Verbraucher fließenden Strom und dem durch die restlichen Verbraucher fließenden Strom subtrahiert, um den Batteriestrom $I_{Batt}$ zu ermitteln. Dieser Batteriestrom $I_{Batt}$ wird - wie bereits oben ausgeführt wurde - im Subtrahierer 1 vom Batteriestromsollwert $I_{Soll}$ subtrahiert.

Gemäß einer ersten Ausführungsform der Erfindung erfolgt keine Abschätzung der für die steuerbaren Verbraucher verfügbaren Leistung $P_V$. Die für die steuerbaren Verbraucher verfügbare Leistung wird vielmehr vorgegeben. Diese Vorgabe kann entweder dadurch erfolgen, daß als Wert der für die steuerbaren Verbraucher verfügbaren Leistung die Solleistung der steuerbaren Verbraucher vorgegeben wird, oder daß die für die steuerbaren Verbraucher verfügbare Leistung zu Null gesetzt wird.

Wird als Wert der für die steuerbaren Verbraucher verfügbaren Leistung die Solleistung der steuerbaren Verbraucher vorgegeben, dann führt dies dazu, daß die Funktionalität der Verbraucher im ersten Moment gesichert ist. Nachteilig bei einer derartigen Vorgabe ist allerdings, daß möglicherweise ein Entladen der Batterie erfolgt bzw. ein Spannungseinbruch auftreten kann.

Wird der Wert der für die steuerbaren Verbraucher verfügbaren Leistung hingegen zu Null gesetzt, dann werden die steuerbaren Verbraucher langsam eingeschaltet und erreichen ihre volle Funktionalität erst nach einiger Zeit. Diese Vorgehensweise hat den Vorteil, daß keine Belastung der Batterie auftritt.

Gemäß einer zweiten Ausführungsform für die Erfindung erfolgt eine Vorsteuerung. Bei dieser wird eine Abschätzung der für die steuerbaren Verbraucher verfügbaren Leistung $P_V$ vorgenommen. Durch eine derartige Vorsteuerung wird erreicht, daß im Vergleich zur ersten Ausführungsform die Auswirkungen einer Entladung der Batterie und eines verzögerten Einschaltens der steuerbaren Verbraucher abgeschwächt werden.

Diese Abschätzung der für die steuerbaren Verbraucher verfügbaren Leistung $P_V$ folgt unter Verwendung der folgenden Beziehung:

$$P_V = P_{GM} - P_{GA}. \qquad (1)$$

Dabei bedeuten die $P_{GM}$ die maximale Generatorleistung in einem Arbeitspunkt und $P_{GA}$ die aktuelle Generatorleistung.

Die maximale Generatorleistung $P_{GM}$ ist eine Funktion der Generatordrehzahl, der Generatorspannung und

der Generatortemperatur:

$$P_{GM} = f(n_g, U_g, T_g).$$

Die maximale Generatorleistung wird aus den genannten Parametern wie folgt bestimmt:

Die Generatorsollspannung wird bei Generatoren mit Schnittstelle von extern vorgegeben, beispielsweise über ein Energiemanagement, und ist dadurch bekannt. Die Generatortemperatur wird meßtechnisch erfaßt oder in erster Näherung als konstant angenommen, beispielsweise zu 160°C, was einer Näherung der Temperatur der Erregerwicklung im Fahrbetrieb entspricht. Die Generatordrehzahl wird mit Hilfe des Übersetzungsverhältnisses ig der Ankopplung des Generators an den Verbrennungsmotor unter Anwendung der folgenden Beziehung aus der Motordrehzahl $n_m$ berechnet:

$$n_g = n_m * i_g. \qquad (2)$$

In vorteilhafter Weise wird für den jeweils eingesetzten Generator die maximale Generatorleistung aus einem abgespeicherten Kennfeld abgeleitet, welche die Parameter $n_g$, $U_g$, $T_g$ aufweist. Diese Parameter werden beispielsweise bei Prüfstandsmessungen ermittelt. Folglich kann bei bekannter Generatorspannung, Generatordrehzahl und Generatortemperatur für den jeweils aktuellen Betriebspunkt aus dem abgespeicherten Kennfeld die maximal mögliche Generatorleistung $P_{GM}$ abgelesen bzw. ermittelt werden.

Als Vereinfachung kann die Generatorspannung auch als konstant angenommen werden, beispielsweise zu 13,5 V. Dadurch wird aus dem Kennfeld eine Kennlinie, was eine Einsparung von Speicherplatz bedeutet.

Die aktuelle Generatorleistung $P_{GA}$ wird gemäß der folgenden Beziehung ermittelt:

$$P_{GA} = P_{Batt} + P_{EV}. \qquad (3)$$

Geht man von einem Bordnetz aus, bei dem bis auf wenige leistungsarme Verbraucher sämtliche elektrische Verbraucher über einen CAN-Bus oder ein sonstiges Informationsnetzwerk erreichbar sind, dann ist der Betriebszustand der einzelnen Verbraucher bekannt, beispielsweise über eine CAN-Botschaft. Der Leistungsbedarf jedes Verbrauchers ist vorzugsweise in einer Tabelle abgelegt. Alternativ dazu kann der Leistungsbedarf auch durch eine Strommessung ermittelt werden. Folglich kann bei bekanntem Betriebszustand jedes Verbrauchers die jeweils zugehörige elektrische Leistung aus der Tabelle bzw. durch eine Messung ermittelt werden und durch eine Aufsummierung der jeweiligen Leistungswerte der gesamte Leistungsbedarf $P_{EV}$ ermittelt werden.

Die Batterieleistung $P_{Batt}$ wird durch Multiplikation zweier Meßgrößen ermittelt, von denen eine der Batteriestrom und die andere die Batteriespannung ist:

$$P_{Batt} = I_{Batt} * U_{Batt}.$$

Alternativ dazu kann die aktuelle Generatorleistung $P_{GA}$ auch über folgenden Zusammenhang ermittelt werden:

$$P_{GA} = f(I_{err}, n_g). \qquad (4)$$

Dabei ist der Erregerstrom $I_{err}$ durch die Spannung an der Erregerwicklung und den Widerstand der Erregerwicklung gegeben. Es gilt:

$$I_{err} = U_{err}/R_{err} = U_g * (1-DF)/R_{err}. \qquad (5)$$

DF ist dabei ein Signal für die Generatorauslastung und wird unter Verwendung des Taktverhältnisses des Generatorreglers ermittelt. Beispielsweise gilt bei voll ausgelastetem Generator:

$$DF = 0.$$

Die Werte für DF liegen als Signal über die Generatorschnittstelle vor. Ist der Generator nicht voll ausgelastet, d.h. DF>0, dann ist die Generatorspannung $U_g$ gleich der über die Schnittstelle vorgegebene Generatorsollspannung. Bei voll ausgelastetem Generator ist die aktuelle Generatorleistung $P_{GA}$ gleich der maximalen Generatorleistung $P_{GM}$. Die Generatorspannung $U_g$ ist diesem Fall kleiner als die Generatorsollspannung. Eine Ermittlung der Generatorspannung kann mittels der folgenden Beziehung vorgenommen werden:

$$U_g = U_{Batt} + R_{Ld} * (I_{Batt} + I_{VB}). \qquad (6)$$

Dabei ist $I_{VB}$ der Strom durch die elektrischen Verbraucher, die an die Batterie angeschlossen sind, und $R_{Ld}$ der Widerstand der Ladeleitung.

Der $R_{err}$ der Erregerwicklung ist temperaturabhängig. Es gilt die folgende Beziehung:

$$R_{err} = R_{err,20°C} * (1+\alpha_{CU} * \Delta T). \qquad (7)$$

Dabei sind die $R_{err, 20°C}$ der Widerstand der Erregerwicklung bei 20°C, $\alpha_{CU}$ eine Materialkonstante und $\Delta T$ eine Temperaturdifferenz.

Liegt die Temperatur nicht als Meßgröße oder als Schätzgröße vor, kann man in erster Näherung eine Temperatur von 160°C für die Erregerwicklung annehmen. Diese entspricht einer Näherung für die mittlere Temperatur im Fahrbetrieb.

Damit ist eine Näherung von $R_{err}$ möglich, wobei angenommen wird, daß $R_{err, 20°C}$ in etwa 2,6Ω beträgt.

Nach alledem kann der Erregerstrom $I_{err}$ unter Verwendung der Gleichungen (5), (6) und (7) ermittelt werden.

Die Generatordrehzahl ng wird unter Verwendung der Gleichung (2) berechnet. Folglich ist die aktuelle Generatorleistung $P_{GA}$ auch über die Beziehung (4) näherungsweise bekannt.

Nach alledem kann die für die steuerbaren Verbraucher verfügbare Leistung $P_V$ unter Verwendung der Gleichung (1) berechnet werden. Diese verfügbare Leistung $P_V$ steht für die steuerbaren Verbraucher zur Verfügung, ohne daß die Batterie zusätzlich belastet werden muß. Ist die zur Verfügung stehende Leistung größer als die für die Verbraucher benötigte Leistung, dann können diese ohne Funktionsbeeinträchtigung betrieben werden.

Erfolgt die vorstehend beschriebene Vorsteuerung zusätzlich zu der oben ausgeführten Stromregelung, dann ist sichergestellt, daß der Batterieladezustand nicht verschlechtert wird. Die Vorgabe des Batteriestromsollwertes $I_{Soll}$ erfolgt dabei derart, daß $I_{soll}$ = 0A gesetzt wird.

Die Sollwertvorgabe kann in Abhängigkeit vom Batterieladezustand oder der Batteriespannung von einem übergeordneten Energiemanagement durchgeführt werden. Durch Vorgabe anderer Werte für den Batteriestromsollwert kann der Batteriezustand in gewünschter Weise beeinflußt werden. Beispielsweise kann zugelassen werden, daß ein bestimmter Entladestrom als Sollwert auftritt. Bei einem kritischen Ladezustand muß dieser Sollwert jedoch wieder auf 0A oder einen Ladestrom, der größer ist als 0A, gesetzt werden.

Aufgrund der oben beschriebenen Leistungszuteilung stellt sich ein Verbraucherstrom ein, der über folgende Beziehung den Batteriestrom definiert:

$$I_{Batt} = I_{Gen} - I_{SV} - I_{RV}.$$

Dieser Batteriestrom wird auf den vom Energiemanagement vorgegebenen Sollwert $I_{soll}$ eingeregelt, wobei diese Regelung nur dann aktiv ist, wenn der Leistungssollwert $P_{Soll}$ für die steuerbaren Verbraucher größer ist als die verfügbare Leistung.

Die Leistung kann nun auf die Verbraucher entsprechend ihrer Priorität verteilt werden. Im Idealfall werden diese so versorgt, daß ein Funktionsverlust von den Fahrzeuginsassen nicht wahrgenommen werden kann. Die Leistungsverteilung führt ein übergeordnetes Energiemanagement oder - falls die entsprechenden Verbraucher zur selben Funktionsgruppe gehören - das entsprechende Steuergerät durch.

In vorteilhafter Weise wird bei der vorliegenden Erfindung ein An- bzw. Abschalten der steuerbaren Verbraucher in Abhängigkeit vom Batteriestrom vorgenommen. Dies erlaubt im Vergleich zum Stand der Technik eine verbesserte Kontrolle des Ladezustands der Batterie.

Bezugszeichenliste:

| | |
|---|---|
| 1 | Subtrahierer |
| 2 | Regler |
| 3 | Subtrahierer |
| 4 | Vergleichs- und Steuerglied |
| 5 | Steuerbare Verbraucher |
| 6 | Subtrahierer |
| DF | Generatorauslastung |
| E/A | Ein-/Ausschaltsignal für den Regler |
| $I_{Batt}$ | Batteriestrom |
| $I_{err}$ | Erregerstrom |
| $I_{Gen}$ | Generatorstrom |
| $I_{RV}$ | Strom durch die restlichen Verbraucher |
| $I_{Soll}$ | Batteriestromsollwert |
| $I_{SV}$ | Strom durch die steuerbaren Verbraucher |
| $I_V$ | Strom durch die Verbraucher |
| $I_{VB}$ | Strom durch die an die Batterie angeschlossenen Verbraucher |
| $\Delta I$ | Stromdifferenzsignal |
| $n_g$ | Generatordrehzahl |
| $n_m$ | Motordrehzahl |
| $P_{Batt}$ | Batterieleistung |
| $P_{EV}$ | Leistungsbedarf der steuerbaren Verbraucher |
| $P_{GA}$ | aktuelle Generatorleistung |
| $P_k$ | Korrekturleistung |
| $P_{GM}$ | maximale Generatorleistung |
| $P_V$ | verfügbare Leistung für die steuerbaren Verbraucher |
| $P_{VI}$ | den steuerbaren Verbrauchern zugeführte Istleistung |
| $P_{VK}$ | korrigierte verfügbare Leistung für die steuerbaren Verbraucher |
| $P_{Soll}$ | Solleistung für die steuerbaren Verbraucher |
| $R_{err}$ | Widerstand der Erregerwicklung |
| $R_{Ld}$ | Widerstand der Ladeleistung |
| $T_G$ | Generatortemperatur |
| $U_{Batt}$ | Batteriespannung |
| $U_{err}$ | Erregerspannung |
| $U_g$ | Generatorspannung |

**Patentansprüche**

1. Verfahren zur Regelung der Leistungsversorgung steuerbarer Verbraucher in einem Kraftfahrzeug, wobei der Batteriestrom ($I_{Batt}$) des Kraftfahrzeuges mit einem Stromsollwert ($I_{Soll}$) verglichen wird, und wobei das ermittelte Differenzsignal ($\Delta I$) einem Regler (2) zugeführt wird und das Ausgangssignal ($P_K$) des Reglers zur Beeinflussung der den steuerbaren Verbrauchern zur Verfügung gestellten Leistung verwendet wird, **dadurch gekennzeichnet, daß** das Ausgangssignal des Reglers (2) zur Korrektur eines für die steuerbaren Verbraucher verfügbaren Leistungswertes verwendet wird, daß ein korrigierter verfügbarer Leistungswert ($P_{VK}$) ermittelt wird, und daß der korrigierte verfügbare Leistungswert ($P_{VK}$) mit einem Leistungssollwert ($P_{Soll}$) für die steuerbaren Verbraucher verglichen wird und dann, wenn der Leistungssollwert für die steuerbaren Verbraucher kleiner ist als der korrigierte verfügbare Leistungswert, der Regler (2) ausgeschaltet wird.

2. Verfahren nach Anspruch 1, **dadurch gekennzeichnet, daß** der Stromsollwert ($I_{Soll}$) in Abhängigkeit vom Batterieladezustand vorgegeben wird.

3. Verfahren nach Anspruch 1, **dadurch gekennzeichnet, daß** der Stromsollwert ($I_{Soll}$) in Abhängigkeit von der Batteriespannung vorgegeben wird.

4. Verfahren nach einem der vorhergehenden Ansprüche, **dadurch gekennzeichnet, daß** dann, wenn der korrigierte verfügbare Leistungswert ($P_{VK}$) kleiner ist als der Leistungssollwert ($P_{Soll}$), der korrigierte verfügbare Leistungswert zur Leistungsversorgung der steuerbaren Verbraucher verwendet wird, und dann, wenn der Leistungssollwert ($P_{Soll}$) kleiner ist als der korrigierte verfügbare Leistungswert ($P_{VK}$), der Leistungssollwert zur Leistungsversorgung der steuerbaren Verbraucher verwendet wird.

5. Verfahren nach einem der vorhergehenden Ansprüche, **dadurch gekennzeichnet, daß** der Batteriestrom ($I_{Batt}$) durch eine Subtraktion der Summe des durch die steuerbaren Verbraucher fließenden Stromes und des durch weitere Verbraucher fließenden Stromes vom Generatorstrom ermittelt wird:

$$I_{Batt} = I_{Gen} - (I_{SV} + I_{RV}).$$

6. Verfahren nach einem der Ansprüche 4-5, **dadurch gekennzeichnet, daß** der für die steuerbaren Verbraucher verfügbare Leistungswert ($P_V$) berechnet wird.

7. Verfahren nach Anspruch 6, **dadurch gekennzeichnet, daß** der für die steuerbaren Verbraucher verfügbare Leistungswert ($P_V$) durch eine Subtraktion der aktuellen Generatorleistung ($P_{GA}$) von der maximalen Generatorleistung ($P_{GM}$) ermittelt wird:

$$P_V = P_{GM} - P_{GA}.$$

8. Verfahren nach Anspruch 7, **dadurch gekennzeichnet, daß** die maximale Generatorleistung in einem vorgegebenen Arbeitspunkt in Abhängigkeit von der Generatordrehzahl, der Generatorspannung und der Generatortemperatur ermittelt wird:

$$P_{GM} = f(n_g, U_g, T_g).$$

9. Verfahren nach Anspruch 8, **dadurch gekennzeichnet, daß** die Generatordrehzahl ($n_g$) mit Hilfe des Übersetzungsverhältnisses ($i_g$) der Ankopplung des Generators an den Verbrennungsmotor gemäß folgender Beziehung aus der Motordrehzahl ($n_m$) berechnet wird:

$$n_g = n_m * i_g.$$

10. Verfahren nach einem der Ansprüche 8 oder 9, **dadurch gekennzeichnet, daß** für den Generator ein Kennfeld mit den Parametern Generatordrehzahl, Generatorspannung und Generatortemperatur abgespeichert wird und im Betrieb aus den abgespeicherten Werten für den jeweils aktuellen Betriebspunkt maximale Generatorleistung abgeleitet wird.

11. Verfahren nach einem der Ansprüche 8 - 10, **dadurch gekennzeichnet, daß** als Generatorspannung ein konstanter Spannungswert verwendet wird.

12. Verfahren nach einem der Ansprüche 7 - 11 **dadurch gekennzeichnet, daß** die aktuelle Generatorleistung ($P_{GA}$) durch eine Addition der Batterieleistung ($P_{Batt}$) und des Leistungsbedarfes der Verbraucher ($P_{EV}$) ermittelt wird.

13. Verfahren nach Anspruch 12, **dadurch gekennzeichnet, daß** zur Ermittlung der Batterieleistung ($P_{Batt}$) der Batteriestrom und die Batteriespannung gemessen und miteinander multipliziert werden.

**14.** Verfahren nach Anspruch 12 oder 13, **dadurch gekennzeichnet, daß** der Leistungsbedarf jedes Verbrauchers in einer Tabelle abgespeichert wird und der Leistungsbedarf der Verbraucher durch eine Addition der aus der Tabelle abgeleiteten Leistungswerte der jeweils aktivierten Verbraucher ermittelt wird.

**15.** Verfahren nach Anspruch 14, **dadurch gekennzeichnet, daß** Informationen über die Betriebszustände der Verbraucher über ein Informationsnetzwerk übertragen werden.

**16.** Verfahren nach Anspruch 15, **dadurch gekennzeichnet, daß** das Informationsnetzwerk ein CAN-Bus ist.

**17.** Verfahren nach Anspruch 12 oder 13, **dadurch gekennzeichnet, daß** der Leistungsbedarf der Verbraucher durch eine Strommessung erfaßt wird.

**18.** Verfahren nach einem der Ansprüche 7 - 11, **dadurch gekennzeichnet, daß** die aktuelle Generatorleistung ($P_{GA}$) aus dem Erregerstrom ($I_{err}$) und der Generatordrehzahl ($n_g$) ermittelt wird.

**19.** Verfahren nach Anspruch 18, **dadurch gekennzeichnet, daß** der Erregerstrom ($I_{err}$) gemäß folgender Beziehung ermittelt wird:

$$I_{err} = U_{err}/R_{err} = U_g * (1-DF)/R_{err},$$

wobei DF die Generatorauslastung beschreibt und $R_{err}$ der Widerstand der Erregerwicklung ist.

**20.** Verfahren nach Anspruch 19, **dadurch gekennzeichnet, daß** die Generatorspannung ($U_g$) gemäß folgender Beziehung ermittelt wird:

$$U_g = U_{Batt} + R_{LD} (I_{Batt} + I_V),$$

wobei $R_{Ld}$ der Widerstand der Ladeleitung und $I_V$ der durch die an die Batterie angeschlossenen elektrischen Verbraucher fließende Strom ist.

**21.** Verfahren nach Anspruch 19 oder 20, **dadurch gekennzeichnet, daß** der Widerstand der Erregerwicklung gemäß folgender Beziehung ermittelt wird:

$$R_{err} = R_{err,20°C} * (1+ \alpha_{Cu} * \Delta T),$$

wobei $R_{err, 20°C}$ der Widerstand der Erregerwicklung bei 20°C, $\alpha_{Cu}$ eine Materialkonstante und $\Delta T$ eine Temperaturdifferenz ist.

**22.** Verfahren nach einem der vorhergehenden Ansprüche, **dadurch gekennzeichnet, daß** den steuerbaren Verbrauchern verschiedene Prioritäten zugeordnet werden und die Leistungsverteilung an die Verbraucher gemäß der Verbraucherprioritäten erfolgt.

**23.** Verfahren nach einem der Ansprüche 4 - 22, **dadurch gekennzeichnet, daß** der für die steuerbaren Verbraucher verfügbare Leistungswert ($P_v$) gleich dem Leistungssollwert der steuerbaren Verbraucher gesetzt wird.

**24.** Verfahren nach einem der Ansprüche 4 - 22, **dadurch gekennzeichnet, daß** der für die steuerbaren Verbraucher verfügbare Leistungswert ($P_V$) gleich Null gesetzt wird.

**EP 1 201 504 B1**

**Claims**

1. Method for controlling the power supply of controllable loads in a motor vehicle, with the battery current ($I_{Batt}$) of the motor vehicle being compared with a desired current value ($I_{Soll}$), and with the difference signal ($\Delta I$) determined being supplied to a controller (2), and the output signal ($P_K$) from the controller being used to influence the power which is provided for the controllable loads, **characterized in that** the output signal from the controller (2) is used to correct a power value which is available for the controllable loads, **in that** a corrected available power value ($P_{VK}$) is determined, and **in that** the corrected available power value ($P_{VK}$) is compared with a desired power value ($P_{Soll}$) for the controllable loads, and the controller (2) is switched off when the desired power value for the controllable loads is lower than the corrected available power value.

2. Method according to Claim 1, **characterized in that** the desired current value ($I_{Soll}$) is predefined as a function of the charge state of the battery.

3. Method according to Claim 1, **characterized in that** the desired current value ($I_{soll}$) is predefined as a function of the battery voltage.

4. Method according to one of the preceding claims, **characterized in that** the corrected available power value is used to supply power to the controllable loads when the corrected available power value ($P_{VK}$) is lower than the desired power value ($P_{soll}$), and the desired power value is used to supply power to the controllable loads when the desired power value ($P_{Soll}$) is lower than the corrected available power value ($P_{VK}$).

5. Method according to one of the preceding claims, **characterized in that** the battery current ($I_{Batt}$) is determined by subtracting from the generator current the sum of the current flowing through the controllable loads and the current flowing through other loads:

$$I_{Batt} = I_{Gen} - (I_{SV} + I_{RV}).$$

6. Method according to either of Claims 4 and 5, **characterized in that** the power value ($P_V$) which is available for the controllable loads is calculated.

7. Method according to Claim 6, **characterized in that** the power value ($P_V$) which is available for the controllable loads is determined by subtracting the actual generator power ($P_{GA}$) from the maximum generator power ($P_{GM}$) :

$$P_V = P_{GM} - P_{GA}.$$

8. Method according to Claim 7, **characterized in that** the maximum generator power is determined at a predefined operating point as a function of the rotational speed of the generator, the generator voltage and the generator temperature:

$$P_{GM} = f(n_g, U_g, T_g).$$

9. Method according to Claim 8, **characterized in that** the rotational speed (ng) of the generator is calculated from the engine speed ($n_m$) using the transmission ratio (ig) of the coupling of the generator to the internal combustion engine, in accordance with the following relationship:

$$n_g = n_m * i_g.$$

10. Method according to either of Claims 8 and 9, **characterized in that** a characteristic diagram comprising the parameters of rotational speed of the generator, generator voltage and generator temperature is stored for the

9

generator and, during operation, the maximum generator power for the respectively actual operating point is derived from the stored values.

11. Method according to one of Claims 8-10, **characterized in that** the generator voltage used is a constant voltage value.

12. Method according to one of Claims 7-11, **characterized in that** the actual generator power ($P_{GA}$) is determined by adding the battery power ($P_{Batt}$) and the power required by the loads ($P_{EV}$).

13. Method according to Claim 12, **characterized in that** the battery current and the battery voltage are measured and multiplied by one another in order to determine the battery power ($P_{Batt}$).

14. Method according to Claim 12 or 13, **characterized in that** the power required by each load is stored in a table, and the power required by the loads is determined by adding the power values of the respectively activated loads, these power values being derived from the table.

15. Method according to Claim 14, **characterized in that** information about the operating states of the loads is transmitted by means of an information network.

16. Method according to Claim 15, **characterized in that** the information network is a CAN bus.

17. Method according to Claim 12 or 13, **characterized in that** the power required by the loads is detected by measuring the current.

18. Method according to one of Claims 7-11, **characterized in that** the actual generator power ($P_{GA}$) is determined from the field current ($I_{err}$) and the rotational speed (ng) of the generator.

19. Method according to Claim 18, **characterized in that** the field current ($I_{err}$) is determined in accordance with the following relationship:

$$I_{err} = u_{err}/R_{err} = U_g * (1-DF)/R_{err},$$

where DF describes the generator load level and $R_{err}$ is the resistance of the field winding.

20. Method according to Claim 19, **characterized in that** the generator voltage (Ug) is determined in accordance with the following relationship:

$$U_g = U_{Batt} + R_{LD}(I_{Batt} + I_V),$$

where $R_{LD}$ is the resistance of the charge line and $I_V$ is the current flowing through the electrical loads which are connected to the battery.

21. Method according to Claim 19 or 20, **characterized in that** the resistance of the field winding is determined in accordance with the following relationship:

$$R_{err} = R_{err, 20°C} * (1 + \alpha_{Cu} * \Delta T),$$

where $R_{err}$, 20°C is the resistance of the field winding at 20°C, $\alpha_{cu}$ is a material constant, and $\Delta T$ is a temperature difference.

22. Method according to one of the preceding claims, **characterized in that** the controllable loads are assigned different priorities, and power is distributed to the loads in accordance with the load priorities.

**23.** Method according to one of Claims 4-22, **characterized in that** the power value (P$_V$) which is available for the controllable loads is set equal to the desired power value of the controllable loads.

**24.** Method according to one of Claims 4-22, **characterized in that** the power value (P$_V$) which is available for the controllable loads is set equal to zero.

**Revendications**

**1.** Procédé de régulation de l'alimentation en puissance de consommateurs réglables dans un véhicule à moteur, le courant de la batterie (I$_{Batt}$) du véhicule à moteur étant comparé à une valeur de consigne du courant (I$_{Soll}$) et le signal différentiel (ΔI) déterminé étant conduit à un régulateur (2) alors que le signal de sortie (P$_K$) du régulateur est utilisé pour agir sur la puissance fournie aux consommateurs réglables,
**caractérisé en ce qu'**
on utilise le signal de sortie du régulateur (2) pour corriger une valeur de puissance disponible pour les consommateurs réglables, on détermine une valeur de puissance disponible corrigée (P$_{VK}$), et on compare la valeur de puissance disponible corrigée (P$_{VK}$) à une valeur de consigne de la puissance (P$_{Soll}$) des consommateurs réglables, puis, si la valeur de consigne de la puissance des consommateurs réglables est inférieure à la valeur de la puissance disponible corrigée, on désactive le régulateur (2).

**2.** Procédé selon la revendication 1,
**caractérisé en ce qu'**
on prédéfinit la valeur de consigne du courant (I$_{Soll}$) en fonction de l'état de charge de la batterie.

**3.** Procédé selon la revendication 1,
**caractérisé en ce qu'**
on prédéfinit la valeur de consigne du courant (I$_{Soll}$) en fonction de la tension de la batterie.

**4.** Procédé selon l'une quelconque des revendications précédentes,
**caractérisé en ce que**
lorsque la valeur de puissance disponible corrigée (P$_{VK}$) est inférieure à la valeur de consigne de la puissance (P$_{Soll}$), on utilise la valeur de la puissance disponible corrigée pour l'alimentation en tension des consommateursréglables et, lorsque la valeur de consigne de la puissance (P$_{Soll}$) est inférieure à la valeur de la puissance disponible corrigée (P$_{VK}$), on utilise la valeur de consigne de la puissance pour l'alimentation en puissance des consommateurs réglables.

**5.** Procédé selon l'une quelconque des revendications précédentes,
**caractérisé en ce qu'**
on détermine le courant de la batterie (I$_{Batt}$) par une soustraction de la somme du courant passant par les consommateurs réglables et du courant, passant par d'autres consommateurs, du courant de l'alternateur

$$I_{Batt} = I_{Gen} - (I_{SV}) + I_{RV}.$$

**6.** Procédé selon l'une quelconque des revendications 4 - 5,
**caractérisé en ce qu'**
on calcule la valeur de la puissance (Pv) disponible pour les consommateurs réglables.

**7.** Procédé selon la revendication 6,
**caractérisé en ce qu'**
on détermine la valeur de la puissance (Pv) disponible pour les consommateurs réglables, par une soustraction de la puissance de l'alternateur (P$_{GA}$) du moment de la puissance maximale de l'alternateur (P$_{GM}$) :

$$P_V = P_{GM} - P_{GA}$$

**8.** Procédé selon la revendication 7,
**caractérisé en ce qu'**
on détermine la puissance maximale de l'alternateur sur un point de fonctionnement dynamique prédéfini en fonction de la vitesse de rotation de l'alternateur, de la tension de l'alternateur et de la température de l'alternateur :

$$P_{GM} = f\,(n_g,\ U_g,\ T_g).$$

**9.** Procédé selon la revendication 8,
**caractérisé en ce qu'**
on calcule la vitesse de rotation de l'alternateur (ng) à l'aide du rapport de transformation (ig) du couplage de l'alternateur sur le moteur à combustion selon l'équation ci-dessous à partir de la vitesse de rotation du moteur ($n_m$) :

$$N_g = n_m \, * \, i_g.$$

**10.** Procédé selon l'une quelconque des revendications 8 ou 9,
**caractérisé en ce qu'** enregistre pour l'alternateur une cartographie comportant les paramètres vitesse de rotation de l'alternateur, tension de l'alternateur et température de l'alternateur et, lors du fonctionnement, une puissance maximale de l'alternateur est dérivée des valeurs enregistrées pour le point de fonctionnement du moment concerné.

**11.** Procédé selon l'une quelconque des revendications 8 à 10,
**caractérisé en ce qu'**
on utilise une valeur de tension constante en tant que tension de l'alternateur.

**12.** Procédé selon l'une quelconque des revendications 7 à 11,
**caractérisé en ce que**
on détermine la puissance de l'alternateur ($P_{GA}$) actuelle en additionnant la puissance de la batterie ($P_{BATT}$) et le besoin en puissance des consommateurs($P_{EV}$).

**13.** Procédé selon la revendication 12,
**caractérisé en ce que**
pour déterminer la puissance de la batterie ($P_{BATT}$), on mesure le courant de la batterie et la tension de la batterie et on les multiplie ensemble.

**14.** Procédé selon la revendication 12 ou 13,
**caractérisé en ce qu'**
on enregistre le besoin en puissance de chaque consommateur dans un tableau et le besoin en puissance des consommateurs déterminé en additionnant les valeurs de puissance des consommateurs activés concernés dérivées de ce tableau.

**15.** Procédé selon la revendication 14,
**caractérisé en ce que**
des informations sur les états de fonctionnement des consommateurs sont transmises via un réseau d'information.

**16.** Procédé selon la revendication 15,
**caractérisé en ce que**
le réseau d'information est un bus CAN.

**17.** Procédé selon la revendication 12 ou 13,
**caractérisé en ce que** le besoin en puissance des consommateurs détecté en mesurant le courant.

**18.** Procédé selon l'une quelconque des revendications 7 à 11,
**caractérisé en ce qu'**
on détermine la puissance de l'alternateur ($P_{GA}$) actuelle à partir du courant d'excitation ($I_{err}$) et de la vitesse de rotation de l'alternateur ($n_g$).

**19.** Procédé selon la revendication 18,
**caractérisé en ce que**
le courant d'excitation ($I_{err}$) est déterminé selon l'équation suivante :

$$I_{err} = u_{err}/R_{err} = U_g * (1-DF)/R_{err},$$

DF étant l'utilisation maximale de l'alternateur et $R_{err}$ la résistance du bobinage d'excitation.

**20.** Procédé selon la revendication 19,
**caractérisé en ce que**
la tension de l'alternateur ($U_g$) est déterminée avec l'équation suivante :

$$U_g = U_{BATT} + R_{LD} (I_{BATT} + I_V)$$

$R_{LD}$ étant la résistance du câble de charge et IV le courant qui passe à travers les consommateursélectriques branchés à la batterie.

**21.** Procédé selon la revendication 19 ou 20,
**caractérisé en ce que**
la résistance de la bobine d'excitation est déterminée selon l'équation suivante :

$$R_{err} = R_{err,\ 20°C} * (1 + \alpha_{Cu} * \Delta T),$$

$R_{err,20°C}$ étant la résistance de la bobine d'excitation à 20°C, $\alpha_{Cu}$ une constante matière et $\Delta T$ une différence de température.

**22.** Procédé selon l'une quelconque des revendications précédentes,
**caractérisé en ce que**
des priorités différentes sont allouées aux consommateurs réglables et la distribution de la puissance aux consommateurs a lieu conformément aux priorités des récepteurs.

**23.** Procédé selon l'une quelconque des revendications 4 à 22,
**caractérisé en ce que**
la valeur de la puissance (Pv) à la disposition des consommateurs réglables est au même niveau que la valeur de consigne de la puissance des consommateurs réglables.

**24.** Procédé selon l'une quelconque des revendications 4 à 22,
**caractérisé en ce que**
la valeur de la puissance ($P_V$) à la disposition des consommateurs réglables est mise à zéro.

EP 1 201 504 B1